Europäisches Patentamt

European Patent Office

Office européen des brevets

(11) Veröffentlichungsnummer: **0 059 849**
**B1**

(12) EUROPÄISCHE PATENTSCHRIFT

(45) Veröffentlichungstag der Patentschrift:
16.01.85

(51) Int. Cl.⁴: **C 04 B 33/32, F 27 B 9/24,**
**F 27 B 9/04, F 27 D 7/06**

(21) Anmeldenummer: 82100983.4

(22) Anmeldetag: 11.02.82

(54) Verfahren zum Herstellen eines Farbspiels beim Brennen von flächigem keramischen Brenngut.

(30) Priorität: 05.03.81 DE 3108325

(43) Veröffentlichungstag der Anmeldung:
15.09.82 Patentblatt 82/37

(45) Bekanntmachung des Hinweises auf die Patenterteilung:
16.01.85 Patentblatt 85/3

(84) Benannte Vertragsstaaten:
DE FR IT NL

(56) Entgegenhaltungen:
DE - A - 2 757 433
DE - A - 2 824 367
GB - A - 1 172 597

SPRECHSAAL; Band 112, Heft 9, September 1979,
Seiten 596-597, Coburg, DE. H.U. KAETHER et al.:
"Schnellbrand von Wand- und Bodenfliesen im
brennhilfsmittellosen Rollenofen"

Die Akte enthält technische Angaben, die nach dem
Eingang der Anmeldung eingereicht wurden und die
nicht in dieser Patentschrift enthalten sind.

(73) Patentinhaber: Buchtal GmbH Keramische Betriebe,
D-8472 Schwarzenfeld (DE)

(72) Erfinder: Cremer, Gottfried, Dr., Steyrer Weg 6,
D-5000 Köln 40 (Junkersdorf) (DE)

(74) Vertreter: Betzler, Eduard, Dipl.-Phys. et al,
P.O.Box 700209 Plinganserstrasse 18a,
D-8000 München 70 (DE)

## Beschreibung

Die Erfindung bezieht sich auf ein Verfahren zum Herstellen eines Farbspiels beim Brennen von flächigem keramischen Brenngut, wie Fliesen oder Platten, in einem aus Vorheiz-, Brenn- und Kühlzone bestehenden Brennofen, vorzugsweise Rollenofen, durch dessen in der Brennzone oxidierende Atmosphäre das Brenngut ohne es stützende Brennhilfsmittel einschichtig hindurchgeführt wird.

Solche Brennöfen, insbesondere in der Ausführungsform von Rollenöfen, haben sich in jüngster Zeit in zunehmendem Masse in vielen Bereichen der keramischen Industrie eingeführt.

Der Vorteil solcher Öfen besteht darin, dass in jedem Punkt des Querschnittes des Öfens eine ausreichende Temperaturbeständigkeit herrscht. Ausserdem ergibt sich eine wesentliche Verminderung des Brennstoffverbrauchs. Schliesslich ist eine erhebliche Einsparung von Arbeitskräften im Betrieb solcher Öfen möglich.

Zum Brennen von flächigem keramischen Brenngut werden solche Brennöfen in Form von Rollenöfen ausschliesslich oxidierend betrieben. Dies bedeutet, dass im Vergleich zur theoretisch erforderlichen Sauerstoffmenge mit einem Überschuss an Sauerstoff, d.h. mit einem Luftüberschuss gefahren wird. Dadurch kommt es zu einer vollständigen Verbrennung des benutzten Brennstoffes, beispielsweise Gas oder Öl.

Da jedoch die Ofenatmosphäre auch die Brennfarbe des Brenngutes wesentlich beeinflusst, ist es mitunter interessant, den Brennvorgang nicht in oxidierender, sondern in reduzierender Atmosphäre durchzuführen.

Bei den herkömmlichen Tunnelöfen werden die Platten nicht in einer Lage nebeneinanderliegend durch den Ofen gefahren, sondern sind auf Tunnelofenwagen gestapelt und werden somit in solchen Stapeln oder Paketen durch den Ofen gefahren. Daraus ergibt sich automatisch, dass beim Brennen in reduzierender Atmosphäre die Reduktion nicht bei allen Platten gleich stark sein kann. Die Platten im Inneren eines solchen Stapels erfahren eine geringere Reduktion als die Platten am Rande des Stapels, wo die reduzierende Atmosphäre nachhaltiger auf die Platten einwirken kann. Auf diese Weise erhält man ein gewisses Farbenspiel zwischen den inneren und äusseren Platten nach dem Brand, so dass sich durch geeignetes Mischen der Platten ein Farbenspiel auf der mit solchen Platten belegten Fläche erzielen lässt.

Dieses Prinzip ist jedoch auf Brennöfen, in denen das Brenngut ohne es stützende Brennhilfsmittel einschichtig hindurchgeführt wird, nicht anwendbar. Würde man nämlich in einem solchen Ofen, in dem die Platten einschichtig nebeneinanderliegend transportiert werden, im klassischen Sinne reduzieren, so werden zwangsläufig alle Platten die gleiche Reduktion erfahren und weisen damit eine einheitliche Farbe auf, d.h. sie sind frei von dem erstrebten Farbenspiel. Die Platten bekommen ein gleichbleibendes uniformes Aussehen, das nur in den seltensten Fällen erwünscht ist.

Es ist aus der DE-OS Nr. 2824367 bekannt, reduzierende Gase, beispielsweise Wasserstoff, in Brennöfen intermittierend und unter hohem Druck einzugeben. Damit will man aber gleichmässig zu reduzierende, vorzugsweise aus Porzellan bestehende Gegenstände brennen.

Aufgabe der Erfindung ist es, bei Brennöfen, vorzugsweise Rollenöfen, durch die das Brenngut ohne es stützende Brennhilfsmittel einschichtig hindurchgeführt wird, eine Möglichkeit zu schaffen, dem Brenngut das begehrte Farbenspiel zu verleihen.

Diese Aufgabe wird erfindungsgemäss dadurch gelöst, dass in oder am Ende der Brennzone in einem abgeschirmten Bereich das Brenngut einer es teilweise reduzierenden Atmosphäre ausgesetzt wird.

Für die Durchführung dieses Verfahrens gibt es grundsätzlich zwei Möglichkeiten. Bei der einen Möglichkeit wird das Brenngut in oder am Ende der Brennzone durch eine Reduktionszone und anschliessend durch eine pulsierende Oxidationszone geführt. Eine Alternative dazu ergibt sich, wenn man im Anschluss an die Führung durch die Reduktionszone gezielt das Brenngut mit einem stark oxidierenden Gas bebläst.

Die zweite Möglichkeit besteht darin, das Brenngut in oder am Ende der Brennzone durch eine pulsierende Reduktionszone zu führen. Auch dazu gibt es eine Alternative in der Form, dass das Brenngut in oder am Ende der Brennzone gezielt mit einem reduzierenden Gas beblasen wird.

Beim ersten Fall, bei welchem an die Brennzone eine Reduktionszone anschliesst, nach deren Verlassen das Brenngut das unerwünschte uniforme Aussehen aufweist, folgt eine Reoxidationszone, die allerdings nur zu einer teilweisen Reoxidation des Brenngutes führen darf, so dass die Oberfläche der Platte neben Reduktions- auch bereits Oxidationsfarben zeigt und sich damit das angestrebte Farbspiel ergibt. Diese teilweise Reoxidation kann entweder durch Pulsieren der Atmosphäre in dieser Zone oder aber durch Beblasen des Brenngutes mit einem stark oxidierenden Gas erreicht werden.

Beim zweiten Fall wird in oder am Ende der Brennzone eine teilweise Reduktion der Brenngutoberfläche erzielt.

Während im ersteren Falle eine Reduktion verhindert werden muss, muss hier eine Reoxidation weitgehendst verhindert werden, woraus sich ergibt, dass die Vorgänge in beiden Fällen in einem abgeschirmten Bereich vollzogen werden müssen.

Liegt der Bereich, in welchem das Brenngut einer es teilweise reduzierenden Atmosphäre ausgesetzt wird, in der Brennzone, dann wird das Brenngut beim Durchfahren des anschliessenden Brennzonenteils, wo keine reduzierende Atmosphäre, sondern wieder eine oxidierende Atmosphäre vorliegt, nicht seines erstrebten Farbspiels beraubt, weil bei der vorliegenden Zusammensetzung des Brenngutes im allgemeinen keine Sauerstoffaufnahmebereitschaft desselben mehr vorliegt. Je nach der Zusammensetzung des Brenngutes kann aber der auf es reduzierend wirkende Bereich auch bis an die an die Brennzone anschliessende Kühlzone verlegt sein. Im Kühlzonenbereich findet keine Reduktion mehr statt.

Die Abschirmung zwischen Brennzone und Kühlzone bzw. Reduktionszone und Kühlzone bereitet keine Schwierigkeiten. Eine solche Abschirmung ist bereits durch jede beliebige Querschnittsverengung erzielbar.

Ein zur Durchführung des Verfahrens geeigneter Brennofen enthält in üblicher Weise eine Vorheiz-, eine Brenn- und eine Kühlzone. In oder am Ende der Brennzone ist ein mechanisch weitgehend abgedichteter Bereich vorgesehen. Dort wird das Brenngut auf es gerichteten Einblasdüsen ausgesetzt. Diese Einblasdüsen können Röhrchen aus feuerfestem Material sein, die einen gerichteten Strahl nach unten auf die Oberfläche des Brenngutes richten, das unter diesen Strahlen hindurchwandert. Man kann aber auch die Einblasdüsen dadurch verwirklichen, dass man quer zur Transportrichtung des Brenngutes die gesamte Breite des Ofenraumes überspannende Rohre vorsieht, die entsprechende Öffnungen aufweisen. Selbstverständlich kann man die Öffnungen auch mit Düsenspitzen od. dgl. versehen.

Eine weitere Möglichkeit besteht darin, die Einblasdüsen oder die sie tragenden Rohre pendelnd aufzuhängen und in eine Pendelbewegung zu versetzen, so dass sich der Anstellwinkel zu dem unter ihnen hindurchtransportierten Brenngut laufend ändert. Mit dieser Massnahme ist es auch möglich, das erwünschte Farbenspiel in stärkerem oder schwächerem Umfang zu erzeugen.

Besonders zweckmässig ist es, wenn in Weiterbildung der Erfindung die Blasdüsen unmittelbar über dem Brenngut enden. Damit erreicht man, dass keine Fehlströmungen entstehen, die die bewusste Steuerung des Farbenspiels durch die Blasdüsen beeinträchtigen könnten.

Eine weitere Möglichkeit besteht darin, die Blasdüsen seitlich in der Ofenwand vorzusehen. In diesem Falle überstreicht der Strahl des oxidierend oder reduzierend wirkenden Gases den gesamten Ofenquerschnitt. Werden diese Düsen periodisch pulsierend betrieben, erhält man ebenfalls das angestrebte Farbspiel.

Das Abgrenzen des Behandlungsraumes in oder am Ende der Brennzone erfolgt zweckmässig durch Abschirmung durch Schürzen aus feuerfestem Fasermaterial, die den Ofenkanal so weit absperren, dass das Brenngut gerade noch durch den verbleibenden Spalt hindurchgeführt werden kann. Bei Rollenöfen verbleibt auch unterhalb der Rollen ein Raum, der dann selbstverständlich in ähnlicher Weise abgeschirmt werden muss.

Sofern eine Reoxidation in der Kühlzone verhindert werden soll, kann in diesem Bereich nicht, wie es bei Rollenöfen allgemein üblich ist, mit sogenannter Sturzkühlung gearbeitet werden, weil sich sonst ein Luftüberschuss ergeben würde, der vermieden werden muss. In diesem Falle erfolgt dann die Kühlung in der Kühlzone mit Wasserkühlung, d.h. mit dort angeordneten Kühlregistern oberhalb und gegebenenfalls auch unterhalb des Rollenbettes, wobei es in diesem Falle zweckmässig ist, ein Inertgas in die durch die Schürzen vom übrigen Ofenraum abgetrennte Kühlzone einzublasen.

## Patentansprüche

1. Verfahren zum Herstellen eines Farbspiels beim Brennen von flächigem keramischen Brenngut, wie Fliesen oder Platten, in einem aus Vorheiz-, Brenn- und Kühlzone bestehenden Brennofen, vorzugsweise Rollenofen, durch dessen in der Brennzone oxidierende Atmosphäre das Brenngut ohne es stützende Brennhilfsmittel einschichtig hindurchgeführt wird, dadurch gekennzeichnet, dass in oder am Ende der Brennzone in einem abgeschirmten Bereich das Brenngut einer es teilweise reduzierenden Atmosphäre ausgesetzt wird.

2. Verfahren nach Anspruch 1, dadurch gekennzeichnet, dass das Brenngut in oder am Ende der Brennzone durch eine Reduktionszone und anschliessend durch eine pulsierende Oxidationszone geführt wird.

3. Verfahren nach Anspruch 1, dadurch gekennzeichnet, dass das Brenngut in oder am Ende der Brennzone durch eine Reduktionszone geführt und anschliessend gezielt mit einem stark oxidierenden Gas beblasen wird.

4. Verfahren nach Anspruch 1, dadurch gekennzeichnet, dass das Brenngut in oder am Ende der Brennzone durch eine pulsierende Reduktionszone geführt wird.

5. Verfahren nach Anspruch 1, dadurch gekennzeichnet, dass das Brenngut in oder am Ende der Brennzone gezielt mit einem reduzierenden Gas beblasen wird.

6. Brennofen zur Durchführung des Verfahrens nach einem der Ansprüche 1 bis 5 mit einer Vorheiz-, einer Brenn- und einer Kühlzone, dadurch gekennzeichnet, dass in oder am Ende der Brennzone ein mechanisch weitgehend abgedichteter Bereich vorgesehen ist und in diesem Bereich auf das Brenngut gerichtete Einblasdüsen vorgesehen sind.

7. Brennofen nach Anspruch 6, dadurch gekennzeichnet, dass die Einblasdüsen Öffnungen in quer zur Transportrichtung des Brenngutes die gesamte Breite des Ofenraumes überspannenden Rohren sind.

8. Brennofen nach einem der Ansprüche 6 oder 7, dadurch gekennzeichnet, dass die Einblasdüsen pulsierend mit Gas beaufschlagt sind.

9. Brennofen nach einem der Ansprüche 6 bis 8, dadurch gekennzeichnet, dass die Einblasdüsen in ihrer Richtung auf das Brenngut verstellbar sind.

10. Brennofen nach einem der Ansprüche 6 bis 9, dadurch gekennzeichnet, dass die Einblasdüsen pendelnd angeordnet sind.

11. Brennofen nach einem der Ansprüche 6 bis 10, dadurch gekennzeichnet, dass die Einblasdüsen unmittelbar über dem Brenngut enden.

12. Brennofen nach Anspruch 6, dadurch gekennzeichnet, dass die Einblasdüsen seitlich in der Ofenwand vorgesehen und periodisch pulsierend betrieben sind.

13. Brennofen nach einem der Ansprüche 6 bis 12, dadurch gekennzeichnet, dass die Kühlzone mittels eines flüssigen Wärmeträgers indirekt gekühlt ist.

## Claims

1. A method for producing a play of colours during the firing of flat ceramic firing material such as tiles or plates in a kiln, preferably a roller kiln, comprising a preheating, a firing and a cooling zone, the firing material being directed in one layer, without kiln furniture to support it, through the oxidizing atmosphere in the firing zone of the kiln, characterized in that the firing material is exposed to an atmosphere which partially reduces it in a shielded area in, or at the end of, the firing zone.

2. A method as claimed in Claim 1, characterized in that the firing material is directed through a reduction zone and then through a pulsating oxidation zone in, or at the end of, the firing zone.

3. A method as claimed in Claim 1, characterized in that the firing material is directed through a reduction zone, and then has a highly oxidizing gas blown selectively at it in, or at the end of, the firing zone.

4. A method as claimed in Claim 1, characterized in that the firing material is directed through a pulsating reduction zone in, or at the end of, the firing zone.

5. A method as claimed in Claim 1, characterized in that the firing material has a reducing gas blown selectively at it in, or at the end of, the firing zone.

6. A kiln for carrying out the method as claimed in one of Claims 1 to 5, comprising a preheating, a firing and a cooling zone, characterized in that an area which is mechanically sealed to a great extent is provided in, or at the end of, the firing zone, and injection nozzles directed towards the firing material are provided in this area.

7. A kiln as claimed in Claim 6, characterized in that the injection nozzles are openings in pipes spanning the entire width of the kiln space at right angles to the direction of transport of the firing material.

8. A kiln as claimed in Claim 6 or 7, characterized in that the injection nozzles are acted upon pulsatingly by gas.

9. A kiln as claimed in one of Claims 6 to 8, characterized in that the injection nozzles are adjustable in terms of their direction towards the firing material.

10. A kiln as claimed in one of Claims 6 to 9, characterized in that the injection nozzles are arranged in pendulum fashion.

11. A kiln as claimed in one of Claims 6 to 10, characterized in that the injection nozzles end immediately above the firing material.

12. A kiln as claimed in Claim 6, characterized in that the injection nozzles are provided in the side of the kiln wall and are pulsatingly operated periodically.

13. A kiln as claimed in one of Claims 6 to 12, characterized in that the cooling zone is cooled indirectly by means of a liquid heat-transfer medium.

## Revendications

1. Procédé de réalisation d'un jeu de couleurs lors de la cuisson de charges céramiques à surface plate, telles que dalles ou carreaux, dans un four de cuisson comprenant une zone de préchauffage, une zone de cuisson et une zone de refroidissement, de préférence dans un four à rouleaux, le passage de la charge de cuisson s'y effectuant à travers l'atmosphère oxydante de la zone de cuisson à une seule couche et sans dispositif de maintien de la charge, caractérisé en ce que la charge de cuisson est mise sous l'influence atmosphérique d'une zone blindée, située dans la zone de cuisson ou à son bout, cette atmophère réduisant partiellement la charge.

2. Procédé selon la revendication 1, caractérisé en ce que la charge de cuisson est transportée à travers une zone de réduction située dans la zone de cuisson ou à son bout et, ensuite, passe dans une zone d'oxydation pulsatoire.

3. Procédé selon la revendication 1, caractérisé en ce qu'un soufflage pointé au gaz fort oxydant est effectué sur la charge de cuisson après son passage à travers la zone de réduction située dans la zone de cuisson ou à son bout.

4. Procédé selon la revendication 1, caractérisé en ce que la charge de cuisson est transportée à travers une zone de réduction pulsatoire située dans la zone de cuisson ou à son bout.

5. Procédé selon la revendication 1, caractérisé en ce que la charge de cuisson se trouvant dans la zone de cuisson ou à son bout est mise sous l'influence d'un soufflage pointé à un gaz réducteur.

6. Four de cuisson permettant la réalisation du procédé selon l'une des revendications 1 à 5, comprenant une zone de préchauffage, une zone de cuisson et une zone de refroidissement, caractérisé en ce qu'une zone rendue mécaniquement assez étanche est prévue dans la zone de cuisson ou à son bout, et que des tuyères d'insufflation orientées vers la charge de cuisson sont prévues dans cette zone.

7. Four de cuisson selon la revendication 6, caractérisé en ce que les tuyères d'insufflation sont des orifices dans des tuyaux transversaux par rapport au sens de passage de la charge de cuisson et s'étendant sur toute la largeur de la chambre du four.

8. Four de cuisson selon l'une des revendications 6 ou 7, caractérisé en ce que les tuyères d'insufflation sont alimentées en gaz de façon pulsatoire.

9. Four de cuisson selon l'une des revendications 6 à 8, caractérisé en ce que les tuyères d'insufflation sont réglables quant à leur orientation vers la charge de cuisson.

10. Four de cuisson selon l'une des revendications 6 à 9, caractérisé en ce que les tuyères d'insufflation sont oscillantes.

11. Four de cuisson selon l'une des revendications 6 à 10, caractérisé en ce que les orifices des tuyères d'insufflation se trouvent directement au-dessus de la charge de cuisson.

12. Four de cuisson selon la revendication 6, caractérisé en ce que les tuyères d'insufflation sont prévues dans la paroi latérale du four et qu'elles sont alimentées de façon pulsatoire périodiquement.

13. Four de cuisson selon l'une des revendications 6 à 12, caractérisé en ce que le refroidissement de la zone de refroidissement est effectué indirectement au moyen d'un caloporteur liquide.